# EUROPÄISCHE PATENTSCHRIFT

(11) **EP 3 760 981 B1**
(45) Veröffentlichungstag und Bekanntmachung des Hinweises auf die Patenterteilung: **25.05.2022**
(21) Anmeldenummer: 20165305.2
(22) Anmeldetag: 24.03.2020
(51) Int. Cl.: G01D 5/347, G01D 5/244

(54) **WINKELMESSEINRICHTUNG UND VERFAHREN ZUM BETRIEB EINER WINKELMESSEINRICHTUNG**
ANGLE MEASURING DEVICE AND METHOD FOR OPERATING AN ANGLE MEASURING DEVICE
DISPOSITIF DE MESURE D'ANGLE ET PROCÉDÉ DE FONCTIONNEMENT D'UN DISPOSITIF DE MESURE D'ANGLE

(30) Priorität: 04.07.2019 DE 102019209866
(43) Veröffentlichungstag der Anmeldung: 06.01.2021
(73) Patentinhaber: Dr. Johannes Heidenhain GmbH, 83301 Traunreut (DE)
(72) Erfinder: MITTERREITER, Johann, 83339 Chieming (DE); GRUBER, Sebastian, 84375 Kirchdorf (DE); BARTLECHNER, Alois, 83349 Palling (DE)

(56) Entgegenhaltungen:
- WO-A1-2018/150833
- DE-A1-102006 020 067
- US-A1- 2006 043 964

## Beschreibung

### BEZEICHNUNG DER ERFINDUNG

Winkelmesseinrichtung und Verfahren zum Betrieb einer Winkelmesseinrichtung

Die Erfindung betrifft eine Winkelmesseinrichtung mit einem Skalenelement zur Messung einer korrigierten relativen Winkelstellung gemäß dem Anspruch 1 sowie ein Verfahren gemäß dem Anspruch 8.

### GEBIET DER TECHNIK

Derartige Winkelmesseinrichtungen können beispielsweise an Spindeln oder Rundtischen montiert werden. Die betreffenden Spindeln oder Rundtische werden häufig in Bearbeitungsmaschinen beziehungsweise Bearbeitungszentren eingesetzt. Spindeln oder Motorspindeln halten in Werkzeugmaschinen häufig ein rotierendes Werkzeug, beispielsweise einen Fräser. An Rundtischen werden Werkstücke befestigt, die dann zum Beispiel spanabhebend bearbeitet werden. Ferner werden Rundtische in Messmaschinen verwendet, wobei in dieser Anwendung ein auf dem Rundtisch befestigtes Werkstück vermessen wird. Winkelmesseinrichtungen werden insbesondere bei Werkzeugmaschinen beziehungsweise Messmaschinen für die Messung von rotatorischen Bewegungen eingesetzt. Es besteht der zunehmende Wunsch die Leistungsfähigkeit derartiger Spindeln oder Rundtische, insbesondere die Präzision während des Betriebs, zu erhöhen.

### STAND DER TECHNIK

In der EP 2 500 696 A1 ist eine Winkelmesseinrichtung offenbart, die mehrere Abtastköpfe aufweist und durch die ein Selbst-Kalibrier-Verfahren durchgeführt werden kann. US 2006/043964 A1 zeigt eine weitere bekannte Winkelmesseinrichtung, die eine Sensorgruppe zum Kalibrieren aufweist.

### ZUSAMMENFASSUNG DER ERFINDUNG

Der Erfindung liegt die Aufgabe zugrunde eine Winkelmesseinrichtung zu schaffen, die es ermöglicht eine hochgenaue Winkelstellung zu bestimmen. Außerdem wird durch die Erfindung ein Verfahren zum Betrieb einer Winkelmesseinrichtung geschaffen, das eine hochgenaue Bestimmung einer Winkelstellung erlaubt.

Diese Aufgabe wird erfindungsgemäß durch die Merkmale des Anspruches 1 beziehungsweise 8 gelöst.

Demnach umfasst die Winkelmesseinrichtung eine erste Bauteilgruppe, eine zweite Bauteilgruppe sowie ein Lager. Die Bauteilgruppen sind relativ zueinander um eine Drehachse durch das Lager beziehungsweise mit Hilfe des Lagers drehbar angeordnet. Die erste Bauteilgruppe umfasst ein Skalenelement, das eine erste Teilung aufweist. Die zweite Bauteilgruppe weist eine erste Baueinheit auf, die ihrerseits zumindest einen Positionssensor aufweist. Zudem weist die zweite Bauteilgruppe eine zweite Baueinheit auf, die einen ersten, zweiten und dritten Positionsaufnehmer aufweist. Die zweite Bauteilgruppe weist darüber hinaus eine Ausgleichskupplung auf. Der Positionssensor und der erste, der zweite sowie der dritte Positionsaufnehmer sind jeweils dem Skalenelement mit einem Luftspalt gegenüber liegend angeordnet. Die erste Baueinheit ist mit Hilfe der Ausgleichskupplung mit der zweiten Baueinheit drehsteif aber axial und radial nachgiebig verbunden, so dass der Positionssensor relativ zu den Positionsaufnehmern drehsteif aber axial und radial nachgiebig angeordnet ist. Die Winkelmesseinrichtung ist so konfiguriert, dass diese in einem ersten Modus und in einem zweiten Modus betreibbar ist. Im ersten Modus ist durch den Positionssensor die erste Teilung zur Bestimmung einer ersten Winkelstellung abtastbar. Im zweiten Modus ist durch die Positionsaufnehmer die erste Teilung oder eine am Skalenelement angeordnete weitere Teilung zur Bestimmung jeweils einer weiteren Winkelstellung abtastbar. Eine korrigierte relative Winkelstellung zwischen den Bauteilgruppen ist basierend auf der ersten Winkelstellung und den weiteren Winkelstellungen bestimmbar.

Der Begriff drehsteif ist im Folgenden so zu verstehen, dass bezogen auf die Umfangsrichtung die Lage des Positionssensors relativ zu den Positionsaufnehmern auch bei einer üblichen Belastung der Ausgleichskupplung unverändert bleibt. Dagegen wird durch die axiale und radiale Nachgiebigkeit der Ausgleichskupplung die Lage des Positionssensors relativ zu den Positionsaufnehmern bei einer üblichen Belastung der Ausgleichskupplung verändert. Insbesondere ist der Positionssensor relativ zum Skalenelement (axial und radial) unbeweglich angeordnet.

Durch die Verwendung der Begriffe Positionssensor und Positionsaufnehmer soll in erster Linie zum Ausdruck gebracht werden, dass diese Elemente an unterschiedlichen Baueinheiten montiert sind. Die betreffenden Elemente (Positionssensor, Positionsaufnehmer) können unterschiedlich oder identisch aufgebaut sein.

Durch den Positionssensor ist eine Winkelstellung des Skalenelements in Bezug auf die zweite Bauteilgruppe innerhalb einer Umdrehung hinweg absolut bestimmbar. Dies kann beispielsweise dadurch erreicht werden, dass die erste Teilung eine absolute Codespur aufweist oder aber dass auf dem Skalenelement eine Referenzmarke aufgebracht ist, die in Verbindung mit einer inkrementalen Teilung eine absolute Bestimmung der Winkelstellung innerhalb einer Umdrehung zulässt.

Der Positionssensor kann dem Skalenelement mit einem Luftspalt gegenüber liegend angeordnet sein, der sich in radialer oder axialer Richtung erstreckt. Ebenso können die Positionsaufnehmer dem Skalenelement jeweils mit einem Luftspalt gegenüber liegend angeordnet sein, der sich in radialer oder axialer Richtung erstreckt, wobei sich in diesem Fall die Größe des jeweiligen Luftspaltes durch belastungsbedingte Verlagerungen, Verschiebungen beziehungsweise Verkippungen unter Verformung der Ausgleichskupplung verändern kann.

Mit Vorteil umfasst die erste Teilung und die optionale weitere Teilung regelmäßige Strukturen, die entlang einer ersten Richtung parallel zueinander aneinandergereiht angeordnet sind. Dabei weist die erste Richtung eine Richtungskomponente in Umfangsrichtung auf.

In weiterer Ausgestaltung der Erfindung weist die zweite Bauteilgruppe eine Lichtquelle auf und die erste Teilung und der Positionssensor sind so ausgestaltet, dass die relative Winkelstellung zwischen den Bauteilgruppen durch ein optisches Prinzip bestimmbar ist.

Mit Vorteil sind zumindest zwei der Positionsaufnehmer in einem Zentriwinkel um die Drehachse von mindestens 90° versetzt angeordnet. Demnach sind also etwa der erste Positionsaufnehmer relativ zum zweiten oder relativ zum dritten Positionsaufnehmer in einem Zentriwinkel um die Drehachse von mindestens 90° versetzt angeordnet. Als Zentriwinkel ist ein Mittelpunktswinkel zu verstehen, wobei der betreffende Mittelpunkt auf der Drehachse liegt.

In weiterer Ausgestaltung der Erfindung sind mindestens drei der Positionsaufnehmer und optional auch der Positionssensor entlang einer Kreislinie angeordnet. Insbesondere können aber auch der erste, der zweite, der dritte und der vierte Positionsaufnehmer (optional mit dem Positionssensor) entlang einer Kreislinie angeordnet sein.

Mit Vorteil weist das Skalenelement eine weitere Teilung auf und das Skalenelement ist so ausgestaltet, dass die erste Teilung nach einem optischen Prinzip abtastbar ist und die weitere Teilung nach einem magnetischen Prinzip. Dabei können die erste Teilung und die weitere Teilung zumindest teilweise überlagert angeordnet sein. Beispielsweise können die erste Teilung und die weitere Teilung an einer Mantelseite eines zylindrischen Skalenelements aufgebracht sein und die erste Teilung und die weitere Teilung bezüglich der axialen Richtung überlagert ausgestaltet sein.

Vorteilhafterweise umfasst die zweite Bauteilgruppe ein Gehäuse, wobei der Positionssensor sowie die Positionsaufnehmer innerhalb des Gehäuses angeordnet sind.

Die Erfindung umfasst gemäß einem weiteren Aspekt auch ein Verfahren zum Betrieb einer Winkelmesseinrichtung. Dabei ist die Winkelmesseinrichtung in einem ersten Modus und in einem zweiten Modus betreibbar, wobei im ersten Modus durch den Positionssensor die erste Teilung zur Bestimmung einer ersten Winkelstellung abgetastet wird und im zweiten Modus durch die Positionsaufnehmer die erste Teilung oder eine am Skalenelement angeordnete weitere Teilung zur Bestimmung jeweils einer weiteren Winkelstellung abgetastet wird. Zudem wird im zweiten Modus eine korrigierte relative Winkelstellung zwischen den Bauteilgruppen bestimmt, wobei die korrigierte relative Winkelstellung auf der ersten Winkelstellung und den weiteren Winkelstellungen basiert.

Gemäß einer Weiterbildung des Verfahrens wird aus den im zweiten Modus bestimmten weiteren Winkelstellungen ein Korrekturwert erzeugt, der im ersten Modus zusammen mit der gemessenen ersten Winkelstellung zur Erzeugung der korrigierten relativen Winkelstellung verwendet wird.

Mit Vorteil wird basierend auf den gemessenen weiteren Winkelstellungen ein Korrekturwert ermittelt und (insbesondere in der Winkelmesseinrichtung) abgespeichert.

Vorteilhafterweise wird im zweiten Modus das Skalenelement über mindestens 360°, insbesondere über mindestens 720°, um die Drehachse gedreht.

Die Winkelmesseinrichtung kann sequenziell im ersten Modus und im zweiten Modus betrieben werden oder aber gleichzeitig im ersten und im zweiten Modus.

Mit Vorteil ist durch den ersten, zweiten und dritten Positionsaufnehmer die erste Teilung oder die weitere Teilung zur Bestimmung einer Verschiebung des Skalenelements in einer Ebene abtastbar.

Weiterhin kann durch den vierten, fünften und sechsten Positionsaufnehmer die zweite Teilung zur Bestimmung einer axialen Position des Skalenelements abgetastet werden.

Vorteilhafterweise weist die Winkelmesseinrichtung einen Speicherbaustein auf, der als Datenlogger verwendbar ist zur Speicherung von Information, die auf den vom Positionssensor und / oder den Positionsaufnehmern erzeugten Signalen beruht.

Mit Vorteil ist zumindest die erste oder die weitere Teilung (oder beide Teilungen) auf einer Mantelseite eines zylindrischen Skalenelementes aufgebracht.

Optional kann die erste Bauteilgruppe ein Skalenelement umfassen, das außer der ersten Teilung eine zweite Teilung aufweist. Durch vierte, fünfte und sechste Positionsaufnehmer kann dann die zweite Teilung abtastbar sein. Durch den vierten, fünften und sechsten Positionsaufnehmer kann eine Verkippung des Skalenelements und damit eine Verkippung der Drehachse um eine Kippachse bestimmt werden. Die zweite Teilung umfasst regelmäßige Strukturen, die entlang einer zweiten Richtung parallel zueinander aneinandergereiht angeordnet sind. Die zweite Richtung weist eine Richtungskomponente in axialer Richtung auf. Weiterhin kann die zweite Teilung als eine inkrementale Teilung oder als eine absolute Teilung ausgestaltet sein. Eine Ausgestaltung als absolute Teilung hat den Vorteil, dass die axiale Position des Skalenelementes auch nach dem Einschalten des Winkelmessgerätes unmittelbar (insbesondere ohne Referenzfahrt) bestimmbar ist, was beispielsweise bei temperaturbedingten axialen Verlagerungen des Skalenelementes hilfreich sein kann.

Die erste Richtung, entlang welcher die regelmäßigen Strukturen der ersten Teilung beziehungsweise weiteren Teilung aneinandergereiht angeordnet sind, kann identisch mit der Umfangsrichtung sein. Genauso kann die erste Richtung zur Umfangsrichtung geneigt beziehungsweise schräg angeordnet sein (jedoch nicht senkrecht zur Umfangsrichtung). Ebenso kann die zweite Richtung, entlang welcher die regelmäßigen Strukturen der zweiten Teilung aneinandergereiht angeordnet sind, identisch mit der axialen Richtung (und damit parallel zur Drehachse) angeordnet sein. Genauso kann die zweite Richtung zur axialen Richtung geneigt beziehungsweise schräg angeordnet sein (jedoch nicht senkrecht zur axialen Richtung). Beispielsweise können die regelmäßigen Strukturen der ersten Teilung und die der zweiten Teilung pfeilförmig zueinander orientiert sein.

Vorteilhafterweise ist die Verschiebung des Skalenelements in der Ebene durch ein magnetisches Prinzip bestimmbar. In diesem Fall sind die Strukturen der Teilung des Skalenelements insbesondere als magnetische Strukturen ausgebildet, also als eine örtlich definierte Abfolge von magnetischen Nord- und Südpolen. Bei dieser Ausgestaltung sind der Positionssensor und / oder die Positionsaufnehmer als Magnetsensoren ausgestaltet. Der Positionssensor und / oder die Positionsaufnehmer können beispielsweise auf Basis eines magnetoresistiven Prinzips arbeiten oder als Hall-Positionsaufnehmer ausgestaltet sein. Alternativ können die Positionsaufnehmer auch auf einem optischen oder induktiven Messprinzip beruhen, wobei auch Kombinationen der Prinzipien möglich sind, so dass die erste Teilung nach einem anderen Prinzip abgetastet werden kann als die zweite Teilung.

Als Skalenelement kommt beispielsweise ein ringförmiger Körper in Betracht, der an einer Nabe befestigt werden kann. Alternativ können aber auch die erste und / oder die zweite Teilung oder eine weitere Teilung direkt auf der Nabe aufgebracht sein.

Mit Vorteil sind der Positionssensor und die Positionsaufnehmer mit einem elektronischen Baustein elektrisch verbunden, wobei durch den elektronischen Baustein die Winkelstellung des Skalenelements, die Verschiebung beziehungsweise die Position des Skalenelements in der Ebene senkrecht zur Drehachse und die Verkippung des Skalenelements bestimmbar sind. Optional kann zudem durch den elektronischen Baustein die axiale Position bestimmt werden.

Bei Spindeln oder Rundtischen, die naturgemäß entsprechend steif ausgestaltet sind, sind derartige Verkippungen vergleichsweise klein und liegen in Bereichen von weniger als einer Winkelminute relativ zur idealen Drehachse, beispielsweise 100 Winkelsekunden bis hinab zu 50 Winkelsekunden. Folglich liegen durch diese Verkippungen auch nur minimale Positionsänderungen vor, so dass die Positionsaufnehmer eine sehr hohe Auflösung haben müssen um verlässliche Aussagen beziehungsweise quantitative Werte bezüglich der Verkippungen liefern zu können. Dadurch, dass die Drehachse gegebenenfalls rotiert, kann die beschriebene Verkippung zu Taumelbewegungen des Skalenelements führen, wobei die Taumelbewegungen durch die Winkelmesseinrichtung insbesondere durch Hinzunahme der gemessenen Winkelstellung quantitativ festgehalten werden können.

Die Positionsaufnehmer können vorteilhafterweise eine Auflösung von weniger als 2 µm haben, insbesondere von weniger als 1 µm, insbesondere von weniger als 750 nm. Diese Werte für die Auflösungen können sowohl für die Bestimmung der axialen als auch der lateralen Positionen, also in der Ebene senkrecht zur Drehachse erreicht werden.

Gemäß einer Weiterbildung des Verfahrens wird die erste Teilung oder eine am Skalenelement angeordnete weitere Teilung durch den ersten, zweiten und dritten Positionsaufnehmer zur Bestimmung jeweils einer weiteren Winkelstellung abgetastet. Aus den erfassten weiteren Winkelstellungen wird eine Verschiebung des Skalenelements in der Ebene bestimmt beziehungsweise berechnet.

Durch die Winkelmesseinrichtung können also nicht nur eine Winkelstellung, sondern auch Achsverlagerungen z.B. eines Rundtisches online detektiert werden. Insbesondere basierend auf den Messwerten der Winkelstellung und der Position des Skalenelements in der Ebene senkrecht zur Drehachse kann eine Korrektur der Soll-Position im Bearbeitungs- beziehungsweise Messprozess durch eine Numerische Steuerung vorgenommen werden. Somit kann etwa die Position eines Werkstückes während der Bearbeitung korrigiert werden. Insbesondere kann die Winkelmesseinrichtung so konfiguriert sein, dass im Zusammenspiel mit einer Numerischen Steuerung Korrekturwerte erzeugt werden, die auf den durch die Winkelmesseinrichtung gemessenen Positionsdaten in Verbindung mit der absoluten Winkelstellung basieren.

Durch derartig ausgestaltete Winkelmesseinrichtung können also in Abhängigkeit einer gemessenen Winkelstellung Verlagerungen oder Bewegungen des Skalenelementes beziehungsweise der Drehachse in den übrigen fünf Freiheitsgraden quantitativ detektiert werden.

Vorteilhafte Ausbildungen der Erfindung entnimmt man den abhängigen Ansprüchen.

Weitere Einzelheiten und Vorteile der erfindungsgemäßen Winkelmesseinrichtung ergeben sich aus der nachfolgenden Beschreibung von Ausführungsbeispielen anhand der beiliegenden Figuren.

### KURZE BESCHREIBUNG DER ZEICHNUNGEN

Es zeigen die
- Figur 1: eine Explosions-Darstellung einer Winkelmesseinrichtung,
- Figur 2: eine weitere Explosions-Darstellung der Winkelmesseinrichtung,
- Figur 3: eine Draufsicht auf die Winkelmesseinrichtung,
- Figur 4: eine Teilschnittdarstellung der Winkelmesseinrichtung,
- Figur 5: eine weitere Teilschnittdarstellung der Winkelmesseinrichtung,
- Figur 6: eine Detailansicht eines Skalenelements der. Winkelmesseinrichtung gemäß einem ersten Ausführungsbeispiel,
- Figur 7: ein Ablaufdiagramm eines Verfahrens zum Betrieb einer Winkelmesseinrichtung,
- Figur 8: ein Ablaufdiagramm eines Verfahrens zum Betrieb einer Winkelmesseinrichtung gemäß einer weiteren Variante,
- Figur 9: eine Detailansicht eines Skalenelements der. Winkelmesseinrichtung gemäß einem weiteren Ausführungsbeispiel.

### BESCHREIBUNG DER AUSFÜHRUNGSFORMEN

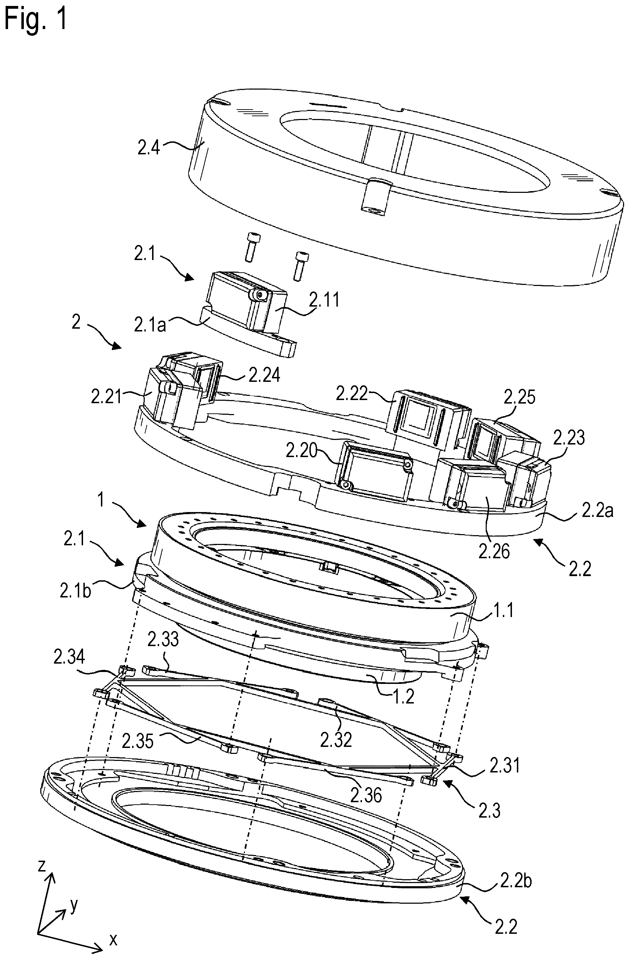

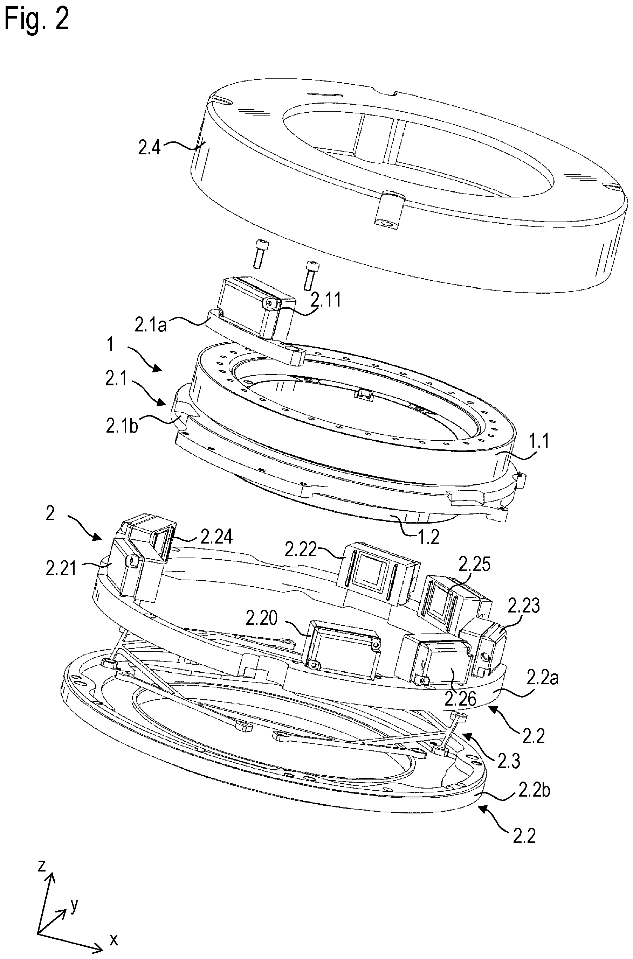

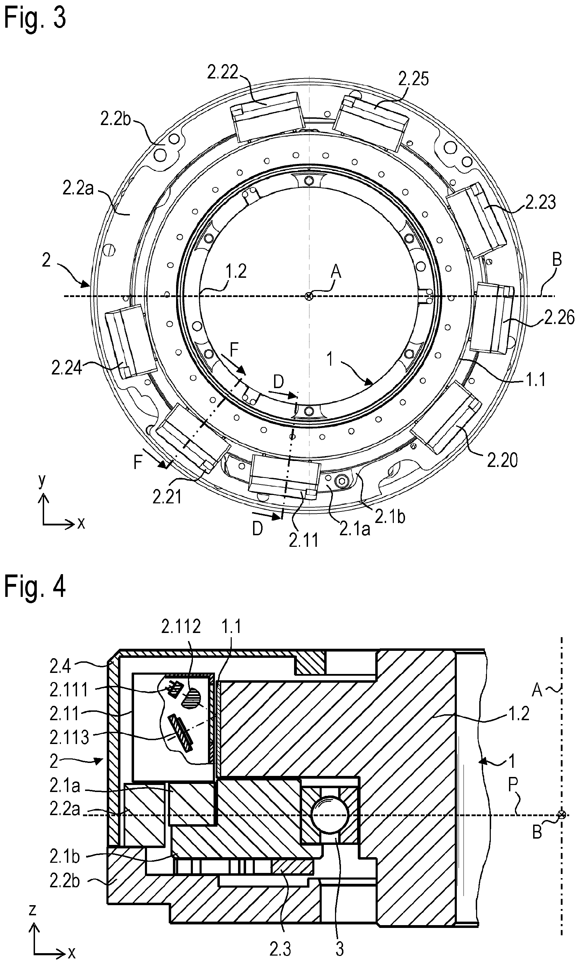

In den Figuren 1 und 2 ist jeweils eine Explosionsdarstellung der Winkelmesseinrichtung gezeigt, wie sie beispielsweise an einer Rundtischachse einer Werkzeugmaschine etwa einer Fräsmaschine eingebaut werden kann. Die Winkelmesseinrichtung umfasst eine erste Bauteilgruppe 1 und eine zweite Bauteilgruppe 2. Die erste Bauteilgruppe 1 ist gemäß der Figur 3 relativ zur zweiten Bauteilgruppe 2 um eine Drehachse A drehbar, so dass die erste Bauteilgruppe 1 dann als Rotor fungieren kann und die zweite Bauteilgruppe 2 auch als Stator bezeichnet werden kann. Zudem umfasst die Winkelmesseinrichtung gemäß der Figur 4 ein Lager 3, das hier als Wälzlager ausgestaltet ist.

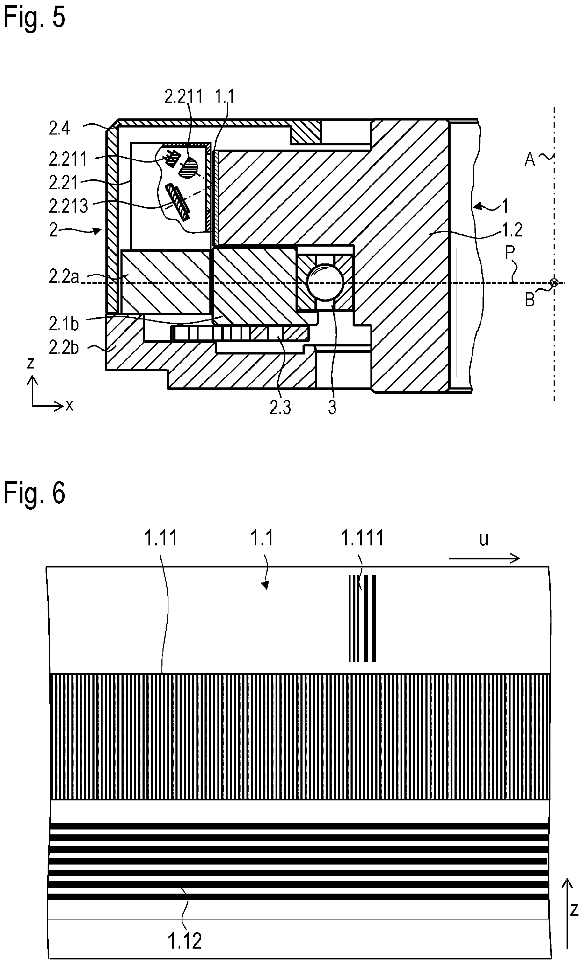

Die erste Bauteilgruppe 1 weist ein Skalenelement 1.1 auf, das an einer Nabe 1.2 drehfest fixiert ist (siehe etwa die Figuren 4 oder 5). Die Nabe 1.2 dient zur Aufnahme einer Welle, beispielsweise eines Rundtisches, so dass dann die Welle starr und drehfest mit der Nabe 1.2 verbunden ist.

Die zweite Bauteilgruppe 2 weist eine erste Baueinheit 2.1 auf, die hier zweiteilig aufgebaut ist und somit ein erstes Teil 2.1a, das hier als Befestigungsbacke bezeichnet werden kann und ein zweites Teil 2.1b umfasst, das im vorgestellten Ausführungsbeispiel als Lagerplatte bezeichnet werden kann. Am ersten Teil 2.1a ist ein Positionssensor 2.11 befestigt, der dem Skalenelement 1.1 mit einem radialen Luftspalt gegenüber liegend angeordnet ist (siehe die Figur 4).

Außerdem umfasst die zweite Bauteilgruppe 2 eine zweite Baueinheit 2.2, welche auch zweiteilig aufgebaut ist. Die zweite Baueinheit 2.2 umfasst demnach ein erstes Teil 2.2a und ein zweites Teil 2.2b, welches hier auch als Flansch bezeichnet werden kann. Unmittelbar am ersten Teil 2.2a, das als Halterungsring ausgestaltet ist, sind mehrere Positionsaufnehmer 2.20 bis 2.26 montiert. Gemäß der Figur 5 sind die Positionsaufnehmer 2.20 bis 2.26 dem Skalenelement 1.1 mit einem radialen Luftspalt gegenüber liegend angeordnet. Gemäß der hier beschriebenen Ausführungsform umfasst die Winkelmesseinrichtung im Einzelnen einen ersten Positionsaufnehmer 2.21, einen zweiten Positionsaufnehmer 2.22, einen dritten Positionsaufnehmer 2.23, einen vierten Positionsaufnehmer 2.24, einen fünften Positionsaufnehmer 2.25, einen sechsten Positionsaufnehmer 2.26 sowie einen siebten Positionsaufnehmer 2.20. Die Positionsaufnehmer 2.20 bis 2.26 sind in Umfangsrichtung u jeweils versetzt zueinander angeordnet.

Die zweite Bauteilgruppe 2 umfasst eine Ausgleichskupplung 2.3. Diese dient dazu Verschiebungen bedingt durch naturgemäße Fertigungs- und Montageungenauigkeiten auszugleichen. Mit Hilfe der Ausgleichskupplung 2.3 ist die erste Baueinheit 2.1 mit der zweiten Baueinheit 2.2 drehsteif aber axial und radial nachgiebig verbunden. Im vorgestellten Ausführungsbeispiel wird durch Schraubverbindungen, die beispielhaft in der Figur 1 durch Strichpunkt-Linien dargestellt sind, das erste Teil 2.1b der ersten Baueinheit 2.1 mit drei Laschen 2.31, 2.33, 2.35 der Ausgleichskupplung 2.3 verbunden. Dagegen wird das zweite Teil 2.2b der zweiten Baueinheit 2.2 mit den drei anderen Laschen 2.32, 2.34, 2.36 der Ausgleichskupplung 2.3 verbunden. Auf diese Weise ist der Positionssensor 2.11 relativ zu den mehreren Positionsaufnehmern 2.20 bis 2.26 drehsteif aber axial und radial nachgiebig beziehungsweise flexibel angeordnet.

Nachdem die Ausgleichskupplung 2.3 mit der ersten Baueinheit 2.1 und mit der zweiten Baueinheit 2.2 auf die oben beschriebene Weise verbunden ist kann das erste Teil 2.2a mit dem zweiten Teil 2.2b der zweiten Baueinheit 2.2 durch Schrauben verbunden werden. Danach sind der Positionssensor 2.11 sowie die Positionsaufnehmer 2.20 bis 2.26 axial auf der Höhe des Skalenelementes 1.1 angeordnet.

Anhand der Figur 1 soll insbesondere die Einbausituation der Ausgleichskupplung 2.3 verdeutlicht werden, während in der Figur 2 die Situation im Hinblick auf die zweite Baueinheit 2.2, die das erste Teil 2.2a und das zweite Teil 2.2b umfasst, veranschaulicht werden soll. Im Zuge der Montage wird die zweite Baueinheit 2.2 axial über das zweite Teil 2.1b der ersten Baueinheit 2.1 bewegt.

Zudem umfasst die zweite Bauteilgruppe 2 ein Gehäuse 2.4, welches mit dem zweiten Teil 2.2b der zweiten Baueinheit 2.2 verbunden wird und in der Regel für den Messbetrieb an einem Maschinenteil starr fixiert wird. Das Gehäuse 2.4 dient dazu den Innenraum der Winkelmesseinrichtung vor Umwelteinflüssen zu schützen. In diesem Zusammenhang sind häufig Dichtungen zwischen der Nabe 1.2 und dem Gehäuse 2.4 vorgesehen, die der Übersichtlichkeit halber in den Figuren aber nicht dargestellt sind.

Wie oben beschrieben ist im bestimmungsgemäßen Betrieb der Winkelmesseinrichtung die Nabe 1.2 starr und drehfest mit einer drehbaren Welle verbunden und das Gehäuse beziehungsweise das zweite Teil 2.2b der zweiten Baueinheit 2.2 mit einem stationärem Maschinenteil. Exzentrizitäten, Taumelbewegungen oder axiale Verschiebungen der Welle relativ zum Maschinenteil verursachen Reaktionskräfte in der Winkelmesseinrichtung insbesondere im Lager 3. Um die Höhe der Reaktionskräfte zu begrenzen ist die Ausgleichskupplung 2.3 vorgesehen, welche in radialer und axialer Richtung nachgiebig ist beziehungsweise elastisch verformbar ist. Andererseits ist die Ausgleichskupplung 2.3 drehsteif, so dass die Genauigkeit der Messung der Winkelstellung nicht beeinträchtigt ist. Der Positionssensor 2.11 ist starr mit dem zweiten Teil 2.1b der ersten Baueinheit 2.1 verbunden. Eine Verformung der Ausgleichskupplung 2.3 hat keinen Einfluss auf die Position des Positionssensors 2.11 relativ zum Skalenelement 1.1. Dagegen können die Positionsaufnehmer 2.20 bis 2.26 im Rahmen der Elastizität der Ausgleichskupplung 2.3 relativ zum Skalenelement 1.1 (axial und radial) verlagert werden.

Im vorgestellten Ausführungsbeispiel sind der Positionssensor 2.11 sowie die Positionsaufnehmer 2.20 bis 2.26 nahezu identisch aufgebaut und alle entlang einer Kreislinie angeordnet. In der Figur 4 ist eine Schnittdarstellung mit dem Positionssensor 2.11 (durch die Linie D-D in Figur 3) und in der Figur 5 eine Schnittdarstellung mit einem Positionsaufnehmer 2.21 (durch die Linie F-F in Figur 3) der Positionsaufnehmer 2.20 bis 2.26 gezeigt. Die betreffenden Positionsaufnehmer 2.11, 2.21 umfassen jeweils eine LED 2.111, 2.211, einen Kondensor 2.112, 2.212 und ein Sensorelement 2.113, 2.213. Das Sensorelement 2.113, 2.213 ist hier als ein so genannter Opto-ASIC auf einer Platine ausgestaltet. Die als Lichtquelle dienende LED 2.111, 2.211 sendet Licht durch den Kondensor 2.112, 2.212 auf das Skalenelement 1.1. Die LED 2.111, 2.211, der Kondensor 2.112, 2.212 und das Sensorelement 2.113, 2.213 sind dabei der zweiten Bauteilgruppe der Winkelmesseinrichtung 2, also dem Stator zugeordnet. Im vorgestellten Ausführungsbeispiel weist jeder Positionsaufnehmer 2.11, 2.20 bis 2.26 ein Gehäuse auf, in dem entsprechende Sensorelemente 2.113, 2.213 angeordnet sind. Alternativ dazu kann auch auf die Gehäuse verzichtet werden oder es können auch mehrere Sensorelemente in ein und demselben Gehäuse angeordnet sein. Beispielsweise können mehrere oder alle Positionsaufnehmer 2.11, 2.20 bis 2.26 auch auf ein und derselben Platine montiert sein.

Im Gegensatz dazu ist das Skalenelement 1.1, wie bereits erwähnt, an der drehbaren Nabe 1.2 befestigt. Das Skalenelement 1.1 umfasst gemäß der Figur 6 eine erste Teilung 1.11 sowie eine zweite Teilung 1.12. Das Skalenelement 1.1 ist im vorgestellten Ausführungsbeispiel als ein zylindrischer beziehungsweise ringförmiger Körper ausgebildet an dessen Mantelseite sowohl die zweite Teilung 1.12 als auch die erste Teilung 1.11 angeordnet sind, wobei die zweite Teilung 1.12 gegenüber der ersten Teilung 1.11 bezüglich der axialen Richtung z versetzt angeordnet ist.

In der Figur 6 ist ein Ausschnitt einer mantelseitigen Ansicht auf das Skalenelement 1.1 gezeigt. Die zweite Teilung 1.12 umfasst regelmäßige Strukturen beziehungsweise Linien, die entlang einer zweiten Richtung parallel zueinander aneinandergereiht angeordnet sind, wobei die zweite Richtung eine Richtungskomponente in axialer Richtung aufweist. Im vorgestellten Ausführungsbeispiel ist die zweite Richtung identisch mit der axialen Richtung z.

Die erste Teilung 1.11 umfasst regelmäßige Strukturen beziehungsweise Linien, die entlang einer zweiten Richtung parallel zueinander aneinandergereiht angeordnet sind, wobei die zweite Richtung eine Richtungskomponente in axialer Richtung aufweist. Die zweite Richtung verläuft im vorgestellten Ausführungsbeispiel parallel zur Drehachse A beziehungsweise parallel zur Richtung z. Zudem umfasst die erste Teilung 1.11 eine Referenzmarke 1.111.

Mit anderen Worten umfasst die erste Teilung 1.11 regelmäßige Strukturen, die hier als Linien ausgestaltet sind und in der zweiten Richtung orientiert und parallel zueinander angeordnet sind. Die zweite Richtung verläuft im vorgestellten Ausführungsbeispiel parallel zur Drehachse A beziehungsweise parallel zur Richtung z. Die zweite Teilung 1.12 umfasst ebenfalls regelmäßige Strukturen, die hier umlaufend ausgestaltet sind und deren umlaufende Längsseiten in der ersten Richtung orientiert und parallel zueinander angeordnet sind. Die erste Richtung verläuft in Umfangsrichtung u.

Die Strukturen der ersten Teilung 1.11 und die der zweiten Teilung 1.12 sind im vorgestellten Ausführungsbeispiel für Licht als reflektierende und nicht reflektierende Streifen ausgestaltet. Das Skalenelement 1.1 vermag durch seine erste Teilung 1.11 das eingestrahlte Licht entsprechend der Winkelstellung des Skalenelements 1.1 beziehungsweise der Nabe 1.2 zu modulieren. Durch die zweite Teilung 1.12 wird das eingestrahlte Licht entsprechend der axialen Position des Skalenelements 1.1 beziehungsweise der Nabe 1.2 moduliert. Das modulierte Licht trifft schließlich in den Figuren 4 und 5 auf Fotodetektoren der Sensorelemente 2.113, 2.213.

Die Positionsaufnehmer 2.20 bis 2.26 sind mit einem elektronischen Baustein elektrisch verbunden. Die Positionsaufnehmer 2.20 bis 2.26 sind gemäß der Figur 3 im Grundsatz paarweise angeordnet (erstes Paar 2.21, 2.24, zweites Paar 2.22, 2.25, drittes Paar 2.23, 2.26). Im vorgestellten Ausführungsbeispiel wird durch den ersten Positionsaufnehmer 2.21, den zweiten Positionsaufnehmer 2.22 und den dritten Positionsaufnehmer 2.23 die erste Teilung 1.11 abgetastet. Durch den vierten Positionsaufnehmer 2.24, den fünften Positionsaufnehmer 2.25 und den sechsten Positionsaufnehmer 2.26 wird die zweite Teilung 1.12 abgetastet, wobei durch diese Positionsaufnehmer 2.24, 2.25, 2.26. die axiale Position des Skalenelements 1.1 bestimmbar ist. Der nicht zu einem der vorgenannten Paare gehörende Positionsaufnehmer 2.20 dient ebenfalls zur Abtastung der ersten Teilung 1.11.

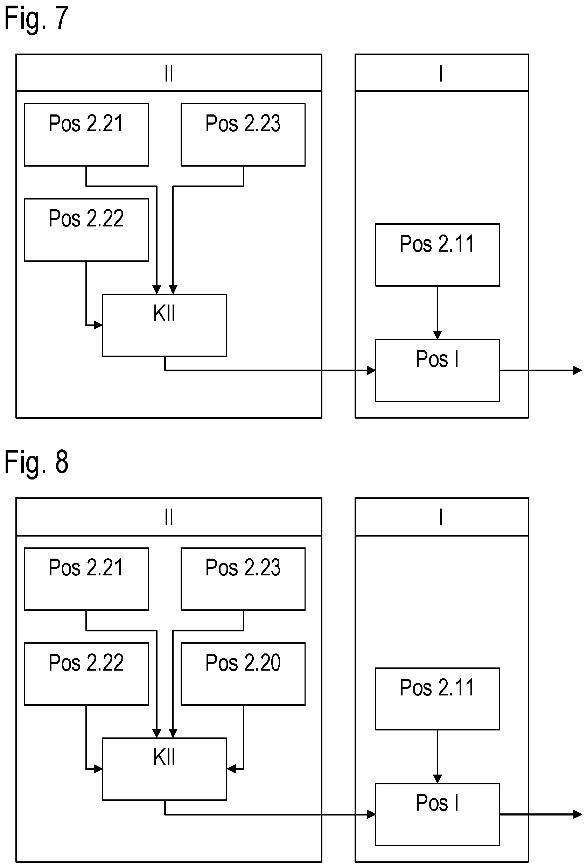

Die betreffende Winkelmesseinrichtung kann wahlweise gemäß den Figuren 7 und 8 in einem ersten Modus I oder in einem zweiten Modus II betrieben werden, wobei die Winkelmesseinrichtung in beiden Modi I, II gleichzeitig betrieben werden kann oder in aufeinanderfolgenden Zeitabschnitten jeweils nur in einem Modus I, II. Der erste Modus I kann als der eigentliche Messmodus definiert werden, während der zweite Modus II auch als Kalibriermodus bezeichnet werden kann. Im zweiten Modus II wird also eine Kalibrierfahrt vorgenommen. Die Winkelmesseinrichtung kann beispielsweise in vordefinierten Betriebszeitabständen in den zweiten Modus II versetzt werden oder nach einer bestimmten Anzahl von Umdrehungen oder nach jedem Einschalten der Winkelmesseinrichtung.

Die erste Teilung 1.11 wird durch den ersten Positionsaufnehmer 2.21, den zweiten Positionsaufnehmer 2.22 und den dritten Positionsaufnehmer 2.23 abgetastet. Während der Kalibrierfahrt wird das Skalenelement 1.1 um mindestens 360° gedreht. Jeder der drei Positionsaufnehmer 2.21, 2.22, 2.23 misst so genannte weitere Winkelstellungen Pos 2.21, Pos 2.22, Pos 2.23 (Figur 7). Aus den gemessenen weiteren Winkelstellungen Pos 2.21, Pos 2.22, Pos 2.23 wird im elektronischen Baustein ein Korrekturwert KII ermittelt und in der Winkelmesseinrichtung oder einer Steuerung gespeichert.

Im ersten Modus I wird dann durch den Positionssensor 2.11 die erste Teilung 1.11 in der Weise abgetastet, dass durch den Positionssensor 2.11 eine erste Winkelstellung Pos 2.11 des Skalenelements 1.1 in Bezug auf die Positionssensor 2.11 bestimmt wird. Dabei kann die erste Winkelstellung Pos 2.11 innerhalb einer Umdrehung hinweg absolut bestimmt werden. Zu diesem Zweck kann wie in der Figur 6 gezeigt eine an sich inkrementale erste Teilung 1.11 verwendet werden, durch die in Verbindung mit der Referenzmarke 1.111 eine absolute erste Winkelstellung Pos 2.11 über eine Umdrehung hinweg erzeugbar ist. Alternativ kann die erste Teilung 1.11 absolut, zum Beispiel als Pseudo-Random-Code oder Gray-Code, im Sinne einer Codierung, also mit einer Erzeugung eines eindeutigen Codewerts ausgestaltet sein. Die Signale des Positionssensors 2.11 werden zu einem elektronischen Baustein, der an geeigneter Stelle in der zweiten Bauteilgruppe 2 montiert ist, geleitet. Die insbesondere digitalen Werte der ersten Winkelstellung Pos 2.11 werden dann von dem elektronischen Baustein erzeugt. Zusammen mit der gemessenen ersten Winkelstellung Pos 2.11 wird im ersten Modus I unter Verwendung des Korrekturwerts KII im elektronischen Baustein eine korrigierte relative Winkelstellung Pos I zwischen den Bauteilgruppen 1, 2 berechnet und als Messergebnis ausgegeben.

Durch die beschriebene Verwendung der Korrekturwerte KII können beispielsweise im Betrieb der Winkelmesseinrichtung auftretende Verformungen des Skalenelements 1.1 in der Weise korrigiert werden, dass eine hohe Messgenauigkeit der Winkelstellung gewährleistet bleibt.

Das Korrekturverfahren kann optimiert werden, indem nicht nur der erste Positionsaufnehmer 2.21, der zweite Positionsaufnehmer 2.22 und der dritte Positionsaufnehmer 2.23 zur Abtastung der ersten Teilung 1.11, verwendet werden, sondern zusätzlich ein vierter Positionsaufnehmer 2.24. Auch in diesem Fall wird während der Kalibrierfahrt das Skalenelement 1.1 um mindestens 360° gedreht. Jeder der vier Positionsaufnehmer 2.20, 2.21, 2.22, 2.23 misst gemäß der Figur 8 weitere Winkelstellungen Pos 2.20, Pos 2.21, Pos 2.22, Pos 2.23. Aus den gemessenen weiteren Winkelstellungen Pos 2.20, Pos 2.21, Pos 2.22, Pos 2.23 wird im elektronischen Baustein ein Korrekturwert KII ermittelt und in der Winkelmesseinrichtung oder einer Steuerung gespeichert. Dieser Korrekturwert KII wird im ersten Modus I zur Korrektur der gemessenen ersten Winkelstellung Pos 2.11 herangezogen, so dass der Baustein eine korrigierte Winkelstellung Pos I zwischen den Bauteilgruppen 1, 2 berechnet und als Messergebnis ausgegeben werden kann.

Durch eine geeignete Verknüpfung der Positionssignale des ersten Positionsaufnehmers 2.21, des zweiten Positionsaufnehmers 2.22 und des dritten Positionsaufnehmers 2.23 im dem elektronischen Baustein kann die Position des Skalenelements 1.1 in einer Ebene P, die senkrecht zur Drehachse A orientiert ist, bestimmt werden, also die x, y Koordinaten der tatsächlichen Lage der Drehachse A. Diese Position, die auch als laterale Position bezeichnet werden kann, hängt bei dem gegebenen Rundtisch von der Belastung während der Bearbeitung ab. Zudem wird der aktuellen lateralen Position auch die korrigierte Winkelstellung Pos I der Nabe 1.2 zugeordnet.

Mit der Winkelmesseinrichtung kann auch durch eine geeignete Verknüpfung der Positionssignale des vierten Positionsaufnehmers 2.24, des fünften Positionsaufnehmers 2.26 und des sechsten Positionsaufnehmers 2.26 das Ausmaß einer Verkippung des Skalenelements 1.1 um eine Kippachse B, die in einer Ebene P liegt, bestimmt werden sowie das Ausmaß und die Richtung von Taumelbewegungen. Die Ebene P ist senkrecht zur Drehachse A orientiert.

Durch die Winkelmesseinrichtung ist es möglich insbesondere bei Rundtischen die absolute Winkelstellung der Nabe 1.2 zu bestimmen und in Abhängigkeit von der absoluten Winkelstellung die laterale und axiale Position der Nabe 1.2 zu messen. Dadurch, dass die genannten Rundtische ohnehin sehr steif konstruiert sind, werden hier Positionsmessungen durchgeführt, die sich im µm-Bereich oder weniger bewegen. Daher ist eine hohe Auflösung insbesondere des Positionssensors 2.11 sowie der Positionsaufnehmer 2.20 bis 2.26 erforderlich. Ebenso können Verkippungen der Drehachse A relativ zum Gehäuse 2.2 um die Kippachse B gemessen werden.

Die weiterverarbeiteten Positionssignale werden schließlich über ein Kabel an ein weiteres Gerät ausgegeben, z. B. an eine Steuerungseinrichtung einer Maschine.

Der Positionssensor 2.11 sowie die Positionsaufnehmer 2.20 bis 2.26 sind also im vorgestellten Ausführungsbeispiel Positionsaufnehmer, welche eine Winkelposition und / oder eine axiale Position erfassen.

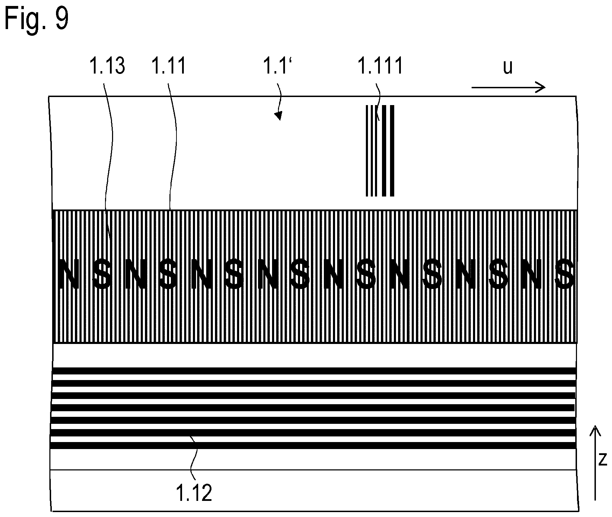

Gemäß der Figur 9 wird ein zweites Ausführungsbeispiel erläutert. Die Figur 9 zeigt eine mantelseitige Ansicht auf ein Skalenelement 1.1'. Das Skalenelement 1.1' umfasst eine erste Teilung 1.11 die derjenigen des ersten Ausführungsbeispiels entspricht. Zudem umfasst die erste Teilung 1.11 eine Referenzmarke 1.111. Die Strukturen der ersten Teilung 1.11 und der Referenzmarke 1.111 sind als für Licht reflektierende und nicht reflektierende Streifen ausgestaltet analog zum ersten Ausführungsbeispiel. Ebenso ist die zweite Teilung analog zum ersten Ausführungsbeispiel ausgestaltet.

Das Skalenelement 1.1' weist aber gemäß dem zweiten Ausführungsbeispiel eine weitere Teilung 1.13 auf. Diese umfasst regelmäßige Strukturen beziehungsweise Linien, die entlang der ersten Richtung parallel zueinander aneinandergereiht angeordnet sind, wobei die erste Richtung eine Richtungskomponente in Umfangsrichtung u aufweist. Im vorgestellten Ausführungsbeispiel ist die erste Richtung identisch mit der Umfangsrichtung u. Die Strukturen der weiteren Teilung 1.13 sind im vorgestellten Ausführungsbeispiel als magnetische Nord- und Südpole ausgestaltet. Die erste Teilung 1.11 und die weitere Teilung 1.13 sind zumindest teilweise überlagert angeordnet.

Der Positionssensor 2.11 kann dann entsprechend der Figur 4 die erste Teilung 1.11 nach einem optischen Prinzip abtasten, während die Positionsaufnehmer nach einem magnetischen Prinzip arbeiten. Somit wird im zweiten Ausführungsbeispiel die erste Winkelstellung Pos 2.11 optisch erfasst und die weiteren Winkelstellungen Pos 2.20, Pos 2.21, Pos 2.22, Pos 2.23, Pos 2.24, Pos 2.25, Pos 2.26 durch ein magnetisches Prinzip.

## Patentansprüche

1. Winkelmesseinrichtung umfassend eine erste Bauteilgruppe (1), eine zweite Bauteilgruppe (2) sowie ein Lager (3), wobei die Bauteilgruppen (1, 2) relativ zueinander um eine Drehachse (A) durch das Lager (3) drehbar angeordnet sind, wobei
- die erste Bauteilgruppe (1) ein Skalenelement (1.1; 1.1') umfasst, das eine erste Teilung (1.11) aufweist,
- die zweite Bauteilgruppe (2)
eine erste Baueinheit (2.1) aufweist, die einen Positionssensor (2.11) aufweist
eine zweite Baueinheit (2.2) aufweist, die einen ersten, zweiten und dritten Positionsaufnehmer (2.21, 2.22, 2.23) aufweist, und
eine Ausgleichskupplung (2.3) aufweist, wobei der Positionssensor (2.11) und die Positionsaufnehmer (2.21, 2.22, 2.23) jeweils dem Skalenelement (1.1; 1.1') mit einem Luftspalt gegenüber liegend angeordnet sind,
die erste Baueinheit (2.1) mit Hilfe der Ausgleichskupplung (2.3) mit der zweiten Baueinheit (2.2) drehsteif aber axial und radial nachgiebig verbunden ist, so dass der Positionssensor (2.11) relativ zu den Positionsaufnehmern (2.21, 2.22, 2.23) drehsteif aber axial und radial nachgiebig angeordnet ist, wobei
die Winkelmesseinrichtung so konfiguriert ist, dass diese in einem ersten Modus (I) und in einem zweiten Modus (II) betreibbar ist, wobei
im ersten Modus (I) durch den Positionssensor (2.11) die erste Teilung (1.11) zur Bestimmung einer ersten Winkelstellung (Pos 2.11) abtastbar ist, und
im zweiten Modus (II) durch die Positionsaufnehmer (2.21, 2.22, 2.23) die erste Teilung (1.11) oder eine am Skalenelement (1.1; 1.1') angeordnete weitere Teilung (1.13) zur Bestimmung jeweils einer weiteren Winkelstellung (Pos 2.21, Pos 2.22, Pos 2.23) abtastbar ist, wobei
eine korrigierte relative Winkelstellung (Pos I) zwischen den Bauteilgruppen (1, 2) basierend auf der ersten Winkelstellung (Pos 2.11) und den weiteren Winkelstellungen (Pos 2.21, Pos 2.22, Pos 2.23) bestimmbar ist.

2. Winkelmesseinrichtung gemäß dem Anspruch 1, wobei die zweite Bauteilgruppe (2) eine Lichtquelle (2.211) aufweist und die erste Teilung (1.11) und der Positionssensor (2.11) so ausgestaltet sind, dass die relative Winkelstellung zwischen den Bauteilgruppen (1, 2) durch ein optisches Prinzip bestimmbar ist.

3. Winkelmesseinrichtung gemäß einem der vorhergehenden Ansprüche, wobei die zumindest zwei der Positionsaufnehmer (2.20, 2.21, 2.22, 2.23) in einem Zentriwinkel um die Drehachse (A) von mindestens 90° versetzt angeordnet sind.

4. Winkelmesseinrichtung gemäß einem der vorhergehenden Ansprüche, wobei mindestens drei Positionsaufnehmer (2.20, 2.21, 2.22, 2.23) entlang einer Kreislinie angeordnet sind.

5. Winkelmesseinrichtung gemäß einem der vorhergehenden Ansprüche, wobei das Skalenelement (1.1') eine weitere Teilung (1.13) aufweist und das Skalenelement (1.1') so ausgestaltet ist, dass die erste Teilung (1.11) nach einem optischen Prinzip abtastbar ist und die weitere Teilung (1.13) nach einem magnetischen Prinzip.

6. Winkelmesseinrichtung gemäß einem der vorhergehenden Ansprüche, wobei die zweite Bauteilgruppe (2) ein Gehäuse (2.4) umfasst und der Positionssensor (2.11) sowie die Positionsaufnehmer (2.20, 2.21, 2.22, 2.23) innerhalb des Gehäuses (2.4) angeordnet sind.

7. Winkelmesseinrichtung gemäß einem der vorhergehenden Ansprüche, wobei durch den ersten, zweiten und dritten Positionsaufnehmer (2.21, 2.22, 2.23) die erste Teilung (1.11) oder eine am Skalenelement (1.1; 1.1') angeordnete weitere Teilung (1.13) zur Bestimmung einer Verschiebung des Skalenelements (1.1; 1.1'; 1.1") in einer Ebene (P) abtastbar ist.

8. Verfahren zum Betrieb einer Winkelmesseinrichtung, die eine erste Bauteilgruppe (1), eine zweite Bauteilgruppe (2) sowie ein Lager (3) umfasst, wobei die Bauteilgruppen (1, 2) relativ zueinander um eine Drehachse (A) durch das Lager (3) drehbar angeordnet sind, wobei
- die erste Bauteilgruppe (1) ein Skalenelement (1.1; 1.1') umfasst, das eine erste Teilung (1.11) aufweist,
- die zweite Bauteilgruppe (2)
eine erste Baueinheit (2.1) aufweist, die einen Positionssensor (2.11) aufweist
eine zweite Baueinheit (2.2) aufweist, die mehrere Positionsaufnehmer (2.20, 2.21, 2.22, 2.23) aufweist, und
eine Ausgleichskupplung (2.3) aufweist, wobei
der Positionssensor (2.11) und die Positionsaufnehmer (2.20, 2.21, 2.22, 2.23) jeweils dem Skalenelement (1.1; 1.1') mit einem Luftspalt gegenüber liegend angeordnet sind,
die erste Baueinheit (2.1) mit Hilfe der Ausgleichskupplung (2.3) mit der zweiten Baueinheit (2.2) drehsteif aber axial und radial nachgiebig verbunden ist, so dass der Positionssensor (2.11) relativ zu den mehreren Positionsaufnehmern (2.20, 2.21, 2.22, 2.23) drehsteif aber axial und radial nachgiebig angeordnet ist, wobei
die Winkelmesseinrichtung in einem ersten Modus (I) und in einem zweiten Modus (II) betreibbar ist, wobei
im ersten Modus (I) durch den Positionssensor (2.11) die erste Teilung (1.11) zur Bestimmung einer ersten Winkelstellung (Pos 2.11) abgetastet wird, und
im zweiten Modus (II) durch die Positionsaufnehmer (2.20, 2.21, 2.22, 2.23) die erste Teilung (1.11) oder eine am Skalenelement (1.1; 1.1') angeordnete weitere Teilung (1.13) zur Bestimmung jeweils einer weiteren Winkelstellung (Pos 2.20, Pos 2.21, Pos 2.22, Pos 2.23) abgetastet wird, wobei
eine korrigierte relative Winkelstellung (Pos I) zwischen den Bauteilgruppen (1, 2) basierend auf der ersten Winkelstellung (Pos 2.11) und den weiteren Winkelstellungen (Pos 2.20, Pos 2.21, Pos 2.22, Pos 2.23) bestimmt wird.

9. Verfahren gemäß dem Anspruch 8, wobei aus den im zweiten Modus (II) bestimmten weiteren Winkelstellungen (Pos 2.20, Pos 2.21, Pos 2.22, Pos 2.23) ein Korrekturwert (KII) erzeugt wird, der im ersten Modus (I) zusammen mit der gemessenen ersten Winkelstellung (Pos 2.11) zur Erzeugung der korrigierten relativen Winkelstellung (Pos I) verwendet wird.

10. Verfahren gemäß dem Anspruch 8 oder 9, wobei basierend auf den gemessenen weiteren Winkelstellungen (Pos 2.20, Pos 2.21, Pos 2.22, Pos 2.23) ein Korrekturwert (KII) ermittelt und abgespeichert wird.

11. Verfahren gemäß dem Anspruch 8, 9 oder 10, wobei im zweiten Modus (II) das Skalenelement (1.1; 1.1') über mindestens 360°, insbesondere über mindestens 720°, um die Drehachse (A) gedreht wird.

12. Verfahren gemäß dem Anspruch 8, 9, 10 oder 11, wobei die Winkelmesseinrichtung sequenziell im ersten Modus (I) und im zweiten Modus (II) betrieben wird.

13. Verfahren gemäß dem Anspruch 8, 9, 10, 11 oder 12 wobei die Winkelmesseinrichtung gleichzeitig im ersten Modus (I) und im zweiten Modus (II) betrieben wird.

14. Verfahren gemäß dem Anspruch 8, 9, 10, 11, 12 oder 13, wobei durch den ersten, zweiten und dritten Positionsaufnehmer (2.21, 2.22, 2.23) die erste Teilung (1.11) oder eine am Skalenelement (1.1; 1.1') angeordnete weitere Teilung (1.13) zur Bestimmung jeweils einer weiteren Winkelstellung (Pos 2.20, Pos 2.21, Pos 2.22, Pos 2.23) abgetastet wird und eine daraus resultierenden Verschiebung des Skalenelements (1.1; 1.1'; 1.1") in einer Ebene (P) bestimmt wird.

15. Verfahren gemäß dem Anspruch 8, 9, 10, 11, 12, 13 oder 14, wobei durch den vierten, fünften und sechsten Positionsaufnehmer (2.24, 2.25, 2.26) die zweite Teilung (1.12) zur Bestimmung einer axialen Position des Skalenelements (1.1) abgetastet wird.

## Claims

1. Angle measuring device comprising a first group of components (1), a second group of components (2) and a bearing (3), wherein the groups of components (1, 2) are arranged so as to be rotatable relative to one another about an axis of rotation (A) by the bearing (3), wherein
- the first group of components (1) has a scale element (1.1; 1.1') having a first graduation (1.11),
- the second group of components (2) has a first structural unit (2.1), which has a position sensor (2.11),
a second structural unit (2.2), which has a first, second and third position pickup (2.21, 2.22, 2.23), and
an equalizing coupling (2.3), wherein
the position sensor (2.11) and the position pickups (2.21, 2.22, 2.23) are each arranged opposite the scale element (1.1; 1.1') with an air gap,
the first structural unit (2.1) is connected to the second structural unit (2.2) with the aid of the equalizing coupling (2.3) in a torsionally rigid but axially and radially resilient manner, with the result that the position sensor (2.11) is arranged in a torsionally rigid but axially and radially resilient manner relative to the position pickups (2.21, 2.22, 2.23), wherein
the angle measuring device is configured such that it is operable in a first mode (I) and in a second mode (II), wherein,
in the first mode (I), the first graduation (1.11) is scannable by the position sensor (2.11) to determine a first angular position (Pos 2.11) and,
in the second mode (II), the first graduation (1.11) or a further graduation (1.13) disposed on the scale element (1.1; 1.1') is scannable by the position pickups (2.21, 2.22, 2.23) to determine a respective further angular position (Pos 2.21, Pos 2.22, Pos 2.23), wherein
a corrected relative angular position (Pos I) between the groups of components (1, 2) is determinable based on the first angular position (Pos 2.11) and the further angular positions (Pos 2.21, Pos 2.22, Pos 2.23).

2. Angle measuring device according to Claim 1, wherein the second group of components (2) has a light source (2.211) and the first graduation (1.11) and the position sensor (2.11) are designed such that the relative angular position between the groups of components (1, 2) is determinable by an optical principle.

3. Angle measuring device according to either of the preceding claims, wherein at least two of the position pickups (2.20, 2.21, 2.22, 2.23) are arranged with an offset at a centre angle about the axis of rotation (A) of at least 90°.

4. Angle measuring device according to one of the preceding claims, wherein at least three position pickups (2.20, 2.21, 2.22, 2.23) are arranged along a circle.

5. Angle measuring device according to one of the preceding claims, wherein the scale element (1.1') has a further graduation (1.13) and the scale element (1.1') is designed such that the first graduation (1.11) is scannable according to an optical principle and the further graduation (1.13) is scannable according to a magnetic principle.

6. Angle measuring device according to one of the preceding claims, wherein the second group of components (2) comprises a housing (2.4), and the position sensor (2.11) and also the position pickups (2.20, 2.21, 2.22, 2.23) are arranged inside the housing (2.4).

7. Angle measuring device according to one of the preceding claims, wherein the first graduation (1.11) or a further graduation (1.13) disposed on the scale element (1.1; 1.1') is scannable by the first, second and third position pickups (2.21, 2.22, 2.23) to determine a displacement of the scale element (1.1; 1.1'; 1.1") in a plane (P).

8. Method for operating an angle measuring device, which comprises a first group of components (1), a second group of components (2) and a bearing (3), wherein the groups of components (1, 2) are arranged so as to be rotatable relative to one another about an axis of rotation (A) by the bearing (3), wherein
- the first group of components (1) has a scale element (1.1; 1.1') having a first graduation (1.11),
- the second group of components (2) has
a first structural unit (2.1), which has a position sensor (2.11),
a second structural unit (2.2), which has a plurality of position pickups (2.20, 2.21, 2.22, 2.23), and
an equalizing coupling (2.3), wherein
the position sensor (2.11) and the position pickups (2.20, 2.21, 2.22, 2.23) are each arranged opposite the scale element (1.1; 1.1') with an air gap,
the first structural unit (2.1) is connected to the second structural unit (2.2) with the aid of the equalizing coupling (2.3) in a torsionally rigid but axially and radially resilient manner, with the result that the position sensor (2.11) is arranged in a torsionally rigid but axially and radially resilient manner relative to the plurality of position pickups (2.20, 2.21, 2.22, 2.23), wherein
the angle measuring device is operable in a first mode (I) and in a second mode (II), wherein,
in the first mode (I), the first graduation (1.11) is scanned by the position sensor (2.11) to determine a first angular position (Pos 2.11) and,
in the second mode (II), the first graduation (1.11) or a further graduation (1.13) disposed on the scale element (1.1; 1.1') is scanned by the position pickups (2.20, 2.21, 2.22, 2.23) to determine a respective further angular position (Pos 2.20, Pos 2.21, Pos 2.22, Pos 2.23), wherein
a corrected relative angular position (Pos I) between the groups of components (1, 2) is determined based on the first angular position (Pos 2.11) and the further angular positions (Pos 2.20, Pos 2.21, Pos 2.22, Pos 2.23).

9. Method according to Claim 8, wherein, from the further angular positions (Pos 2.20, Pos 2.21, Pos 2.22, Pos 2.23) determined in the second mode (II), a correction value (KII) is produced which, in the first mode (I) is used together with the measured first angular position (Pos 2.11) to produce the corrected relative angular position (Pos I).

10. Method according to Claim 8 or 9, wherein a correction value (KII) is ascertained and stored based on the measured further angular positions (Pos 2.20, Pos 2.21, Pos 2.22, Pos 2.23).

11. Method according to Claim 8, 9 or 10, wherein, in the second mode (II), the scale element (1.1; 1.1') is rotated about the axis of rotation (A) over at least 360°, in particular over at least 720°.

12. Method according to Claim 8, 9, 10 or 11, wherein the angle measuring device is operated sequentially in the first mode (I) and in the second mode (II).

13. Method according to Claim 8, 9, 10, 11 or 12, wherein the angle measuring device is operated simultaneously in the first mode (I) and in the second mode (II).

14. Method according to Claim 8, 9, 10, 11, 12 or 13, wherein the first graduation (1.11) or a further graduation (1.13) disposed on the scale element (1.1; 1.1') is scanned by the first, second and third position pickups (2.21, 2.22, 2.23) to determine a respective further angular position (Pos 2.20, Pos 2.21, Pos 2.22, Pos 2.23) and a resulting displacement of the scale element (1.1; 1.1'; 1.1") in a plane (P) is determined.

15. Method according to Claim 8, 9, 10, 11, 12, 13 or 14, wherein the second graduation (1.12) is scanned by the fourth, fifth and sixth position pickups (2.24, 2.25, 2.26) to determine an axial position of the scale element (1.1) .

## Revendications

1. Dispositif de mesure d'angle comportant un premier groupe de composants (1), un deuxième groupe de composants (2) ainsi qu'un palier (3), les groupes de composants (1, 2) étant disposés de manière à pouvoir tourner l'un par rapport à l'autre autour d'un axe de rotation (A) par le biais du palier (3),
- le premier groupe de composants (1) comportant un élément à échelle (1.1 ; 1.1') qui comprend une première graduation (1.11),
- le deuxième groupe de composants (2)
comprenant une première unité structurale (2.1) qui comprend un détecteur de position (2.11),
comprenant une deuxième unité structurale (2.2) qui comprend un premier, un deuxième et un troisième capteur de position (2.21, 2.22, 2.23), et
comprenant un accouplement de compensation (2.3),
le détecteur de position (2.11) et les capteurs de position (2.21, 2.22, 2.23) étant disposés respectivement en regard de l'élément à échelle (1.1 ; 1.1') avec un espace d'air,
la première unité structurale (2.1) étant reliée à la deuxième unité structurale (2.2) de manière rigide à la torsion mais flexible axialement et radialement à l'aide de l'accouplement de compensation (2.3), de sorte que le détecteur de position (2.11) soit disposé de manière rigide à la torsion mais flexible axialement et radialement par rapport aux capteurs de position (2.21, 2.22, 2.23),
le dispositif de mesure d'angle étant configuré de telle sorte que celui-ci peut fonctionner dans un premier mode (I) et dans un deuxième mode (II),
dans le premier mode (I), la première graduation (1.11) pouvant être balayée par le détecteur de position (2.11) pour la détermination d'une première position angulaire (Pos 2.11), et
dans le deuxième mode (II), la première graduation (1.11) ou une autre graduation (1.13) disposée sur l'élément à échelle (1.1 ; 1.1') pouvant être balayée par les capteurs de position (2.21, 2.22, 2.23) pour la détermination respectivement d'une autre position angulaire (Pos 2.21, Pos 2.22, Pos 2.23),
une position angulaire relative corrigée (Pos I) entre les groupes de composants (1, 2) pouvant être déterminée sur la base de la première position angulaire (Pos 2.11) et des autres positions angulaires (Pos 2.21, Pos 2.22, Pos 2.23).

2. Dispositif de mesure d'angle selon la revendication 1, le deuxième groupe de composants (2) comprenant une source de lumière (2.211) et la première graduation (1.11) et le détecteur de position (2.11) étant configurés de telle sorte que la position angulaire relative entre les groupes de composants (1, 2) puisse être déterminée par un principe optique.

3. Dispositif de mesure d'angle selon l'une des revendications précédentes, les au moins deux des capteurs de position (2.20, 2.21, 2.22, 2.23) étant disposés de manière décalée d'au moins 90° suivant un angle de centrage autour de l'axe de rotation (A).

4. Dispositif de mesure d'angle selon l'une des revendications précédentes, au moins trois capteurs de position (2.20, 2.21, 2.22, 2.23) étant disposés le long d'une ligne circulaire.

5. Dispositif de mesure d'angle selon l'une des revendications précédentes, l'élément à échelle (1.1') comprenant une autre graduation (1.13) et l'élément à échelle (1.1') étant conçu de telle sorte que la première graduation (1.11) peut être balayée suivant un principe optique et l'autre graduation (1.13) suivant un principe magnétique.

6. Dispositif de mesure d'angle selon l'une des revendications précédentes, le deuxième groupe de composants (2) comportant un boîtier (2.4) et le détecteur de position (2.11) ainsi que les capteurs de position (2.20, 2.21, 2.22, 2.23) étant disposés à l'intérieur du boîtier (2.4).

7. Dispositif de mesure d'angle selon l'une des revendications précédentes, les premier, deuxième et troisième capteurs de position (2.21, 2.22, 2.23) pouvant balayer la première graduation (1.11) ou une autre graduation (1.13) disposée sur l'élément à échelle (1.1 ; 1.1') pour la détermination d'un déplacement de l'élément à échelle (1.1 ; 1.1' ; 1.1") dans un plan (P).

8. Procédé de fonctionnement d'un dispositif de mesure d'angle, qui comporte un premier groupe de composants (1), un deuxième groupe de composants (2) ainsi qu'un palier (3), les groupes de composants (1, 2) étant disposés de manière à pouvoir tourner l'un par rapport à l'autre autour d'un axe de rotation (A) par le biais du palier (3),
- le premier groupe de composants (1) comportant un élément à échelle (1.1 ; 1.1') qui comprend une première graduation (1.11),
- le deuxième groupe de composants (2) comprenant une première unité structurale (2.1) qui comprend un détecteur de position (2.11),
comprenant une deuxième unité structurale (2.2) qui comprend plusieurs capteurs de position (2.20, 2.21, 2.22, 2.23), et
comprenant un accouplement de compensation (2.3),
le détecteur de position (2.11) et les capteurs de position (2.20, 2.21, 2.22, 2.23) étant disposés respectivement en regard de l'élément à échelle (1.1 ; 1.1') avec un espace d'air,
la première unité structurale (2.1) étant reliée à la deuxième unité structurale (2.2) de manière rigide à la torsion mais flexible axialement et radialement à l'aide de l'accouplement de compensation (2.3), de sorte que le détecteur de position (2.11) soit disposé de manière rigide à la torsion mais flexible axialement et radialement par rapport aux plusieurs capteurs de position (2.20, 2.21, 2.22, 2.23),
le dispositif de mesure d'angle pouvant fonctionner dans un premier mode (I) et dans un deuxième mode (II),
dans le premier mode (I), la première graduation (1.11) pouvant être balayée par le détecteur de position (2.11) pour la détermination d'une première position angulaire (Pos 2.11), et
dans le deuxième mode (II), la première graduation (1.11) ou une autre graduation (1.13) disposée sur l'élément à échelle (1.1 ; 1.1') pouvant être balayée par les capteurs de position (2.20, 2.21, 2.22, 2.23) pour la détermination respectivement d'une autre position angulaire (Pos 2.20, Pos 2.21, Pos 2.22, Pos 2.23),
une position angulaire relative corrigée (Pos I) entre les groupes de composants (1, 2) pouvant être déterminée sur la base de la première position angulaire (Pos 2.11) et des autres positions angulaires (Pos 2.20, Pos 2.21, Pos 2.22, Pos 2.23).

9. Procédé selon la revendication 8, une valeur de correction (KII) étant produite à partir des autres positions angulaires (Pos 2.20, Pos 2.21, Pos 2.22, Pos 2.23) déterminées dans le deuxième mode (II), laquelle valeur de correction est utilisée dans le premier mode (I) conjointement avec la première position angulaire mesurée (Pos 2.11) pour produire la position angulaire relative corrigée (Pos I) .

10. Procédé selon la revendication 8 ou 9, une valeur de correction (KII) étant déterminée sur la base des autres positions angulaires mesurées (Pos 2.20, Pos 2.21, Pos 2.22, Pos 2.23) et enregistrée.

11. Procédé selon la revendication 8, 9 ou 10, l'élément à échelle (1.1 ; 1.1') étant tourné d'au moins 360°, en particulier d'au moins 720°, autour de l'axe de rotation (A) dans le deuxième mode (II).

12. Procédé selon la revendication 8, 9, 10 ou 11, le dispositif de mesure d'angle fonctionnement séquentiellement dans le premier mode (I) et dans le deuxième mode (II).

13. Procédé selon la revendication 8, 9, 10, 11 ou 12, le dispositif de mesure d'angle fonctionnement simultanément dans le premier mode (I) et dans le deuxième mode (II).

14. Procédé selon la revendication 8, 9, 10, 11, 12 ou 13, la première graduation (1.11) ou une autre graduation (1.13) disposée sur l'élément à échelle (1.1 ; 1.1') pouvant être balayée par les premier, deuxième et troisième capteurs de position (2.21, 2.22, 2.23) pour la détermination respectivement d'une autre position angulaire (Pos 2.20, Pos 2.21, Pos 2.22, Pos 2.23) et un déplacement, qui en résulte, de l'élément à échelle (1.1 ; 1.1' ; 1.1") dans un plan (P) étant déterminé.

15. Procédé selon la revendication 8, 9, 10, 11, 12, 13 ou 14, la deuxième graduation (1.12) étant balayée par les quatrième, cinquième et sixième capteurs de position (2.24, 2.25, 2.26) pour la détermination d'une position axiale de l'élément à échelle (1.1).
